# EUROPEAN PATENT APPLICATION

(11) **EP 1 437 644 A2**
(43) Date of publication of application: **14.07.2004**
(21) Application number: 03028295.8
(22) Date of filing: 10.12.2003
(51) Int. Cl.: G06F 3/033

(54) **Sound apparatus, and audio information acquisiton method in sound apparatus**

(30) Priority: 26.12.2002 JP 2002377170
(71) Applicant: Kabushiki Kaisha Toshiba, Tokyo (JP)
(72) Inventor: Tsuchiuchi, Takayasu, Minato-ku Tokyo 105-8001 (JP)
(74) Representative: Henkel, Feiler & Hänzel

(57) **Abstract**

This invention is related to a sound apparatus including a unit (14, 15) which selects one audio information from pieces of audio information of a plurality of application programs executed in an information processing apparatus, and a unit (5) which outputs the selected audio information.

## Description

The present invention relates to a sound apparatus such as a wireless headset and an audio information acquisition method in the sound apparatus.

A technique capable of selecting one audio information from pieces of audio information prepared for one movie (content) at a movie theater has conventionally been disclosed as an example of a sound apparatus such as a headset used by the viewer (Jpn. Pat. Appln. KOKAI Publication No. 2002-125300).

The development of a recent short-distance wireless communication technique represented by Bluetooth® provides a technique of wirelessly transmitting audio information of an application program executed in an information processing apparatus to a sound apparatus such as a headset, and playing back and outputting the audio information in the sound apparatus.

Recent information processing apparatuses can simultaneously execute a plurality of application programs, like Microsoft Windows® OS. When these application programs output audio information, the user of the sound apparatus such as a headset may want to listen to the sound of any application program.

The technique disclosed in the Reference (Jpn. Pat. Appln. KOKAI Publication No. 2002-125300) describes switching of audio information belonging to one content in a sound apparatus, but does not disclose switching of audio information of an application program executed in an information processing apparatus.

A technique capable of selecting pieces of audio information of a plurality of application programs is not disclosed in a conventional sound apparatus capable of playing back audio information of an application program executed in an information processing apparatus by using short-distance wireless communication. Even if a plurality of application programs run in an information processing apparatus, the user cannot listen to only audio information of an arbitrary application program.

According to an aspect according to the present invention, there is provided a sound apparatus comprising a unit which selects one audio information from pieces of audio information of a plurality of application programs executed in an information processing apparatus, and a unit which outputs the selected audio information.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a sound system having a personal computer and headphone which play back sound and moving picture contents;
FIG. 2 is a partial enlarged view showing a headphone 5;
FIG. 3 is a view showing a state wherein two application programs are executed on the display;
FIG. 4 is a view for explaining switching between two contents;
FIG. 5 is a view for explaining switching between pieces of audio information in one content;
FIG. 6 is a flow chart for explaining headphone operation;
FIG. 7 is a flow chart for explaining the operation of the sound system according to the embodiment of the present invention;
FIG. 8 is a flow chart for explaining the operation of the sound system according to the embodiment of the present invention;
FIG. 9 is a view showing a sound system using a plurality of headphones;
FIG. 10 is a view showing a case wherein a headphone 5a acquires the sound of an application program S, that of a content X played back by an application program T, and that of an application program U;
FIG. 11 is a view showing a case wherein a headphone 5b acquires the sound of a content Y played back by the application program T and that of the application program U;
FIG. 12 is a view showing an arrangement in which a plurality of displays 4a and 4b are connected to one PC 1; and
FIG. 13 is a view showing a case wherein the headphones 5a and 5b acquire pieces of audio information of application programs displayed on desired displays.

A sound system according to a preferred embodiment of the present invention will be described below with reference to the several views of the accompanying drawing.

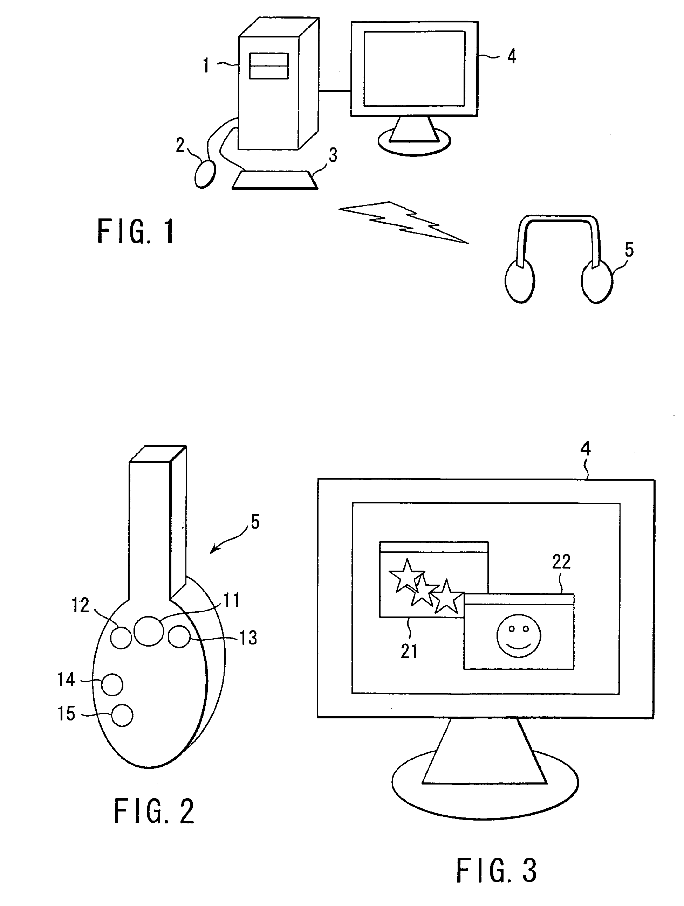

FIG. 1 is a view showing a sound system having a personal computer (to be referred to as a PC hereinafter) which plays back sound and moving picture contents and headphone which plays back sounds.

As shown in FIG. 1, a PC 1 is connected to a display 4 and a user interface such as a mouse 2 and keyboard 3. The PC 1 can play back sound and moving pictures. The PC 1 has a CPU which controls the overall PC 1, a memory which stores an application program and a program for executing processing according to the embodiment of the present invention, and a general wireless communication function such as a wireless module for performing short-distance wireless communication represented by Bluetooth®.

The PC 1 and a headphone 5 can exchange data via a wireless module, and the main role is transmission/reception of audio information and control signals.
The headphone 5 comprises a wireless module for performing short-distance wireless communication with the PC 1, a CPU which controls entire processing necessary to play back audio information, such as decoding processing of encoded audio information transmitted from the PC 1, a sound output unit, a battery, and the like.

FIG. 2 is a partial enlarged view showing the headphone 5.

As shown in FIG. 2, the headphone 5 comprises a playback/stop button 11, a rewind button 12, a fast forward button 13, a moving button 14, and a determination button 15 for determining whether to output audio information. When any one of these buttons 11 to 14 is pressed, a control signal corresponding to the pressed button is transmitted to the PC 1 via the wireless module.

The PC 1 plays back sound and moving picture contents. An embodiment concerning moving picture contents will be described. Sound is contained in a moving picture, and a description thereof will be omitted.

FIG. 3 shows a state wherein two contents are simultaneously played back on the display. Two windows 21 and 22 are activated in the window system, and display corresponding contents. The user who enjoys a content controls contents and selects desired audio information by using the buttons 11 to 15 serving as user interfaces attached to the headphone.

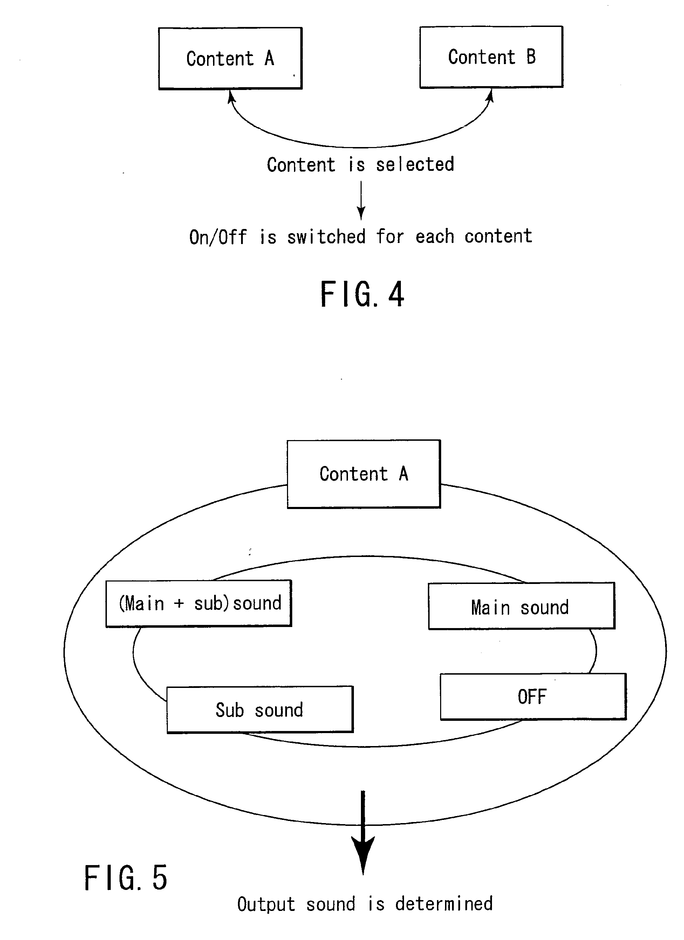

FIG. 4 is a view for explaining switching between two contents.

Two contents are switched with the moving button 14 of the headphone 5. More specifically, when the moving button 14 is pressed, a control signal representing that the moving button has been pressed is transmitted from the headphone 5 to the PC 1. A program in the PC 1 receives the control signal to switch the content.

Switching between contents has been described. This also applies to switching between application programs and switching between main sound and sub sound contained in a content.

FIG. 5 is a view for explaining switching between pieces of audio information in one content. In FIG. 5, content A contains "main sound", "sub sound", "main sound + sub sound", and "sound OFF", and these pieces of audio information are switched with the moving button. After an application program, content, and audio information are selected, the ON/OFF state of the audio information is determined with the determination button 15. When the determination button 15 is pressed, a control signal representing that the determination button has been pressed is transmitted from the headphone 5 to the PC 1.

That is, according to the embodiment, audio information of an application program is switched with the moving button of the headphone 5, and the ON/OFF state of the audio information is determined with the determination button 15.

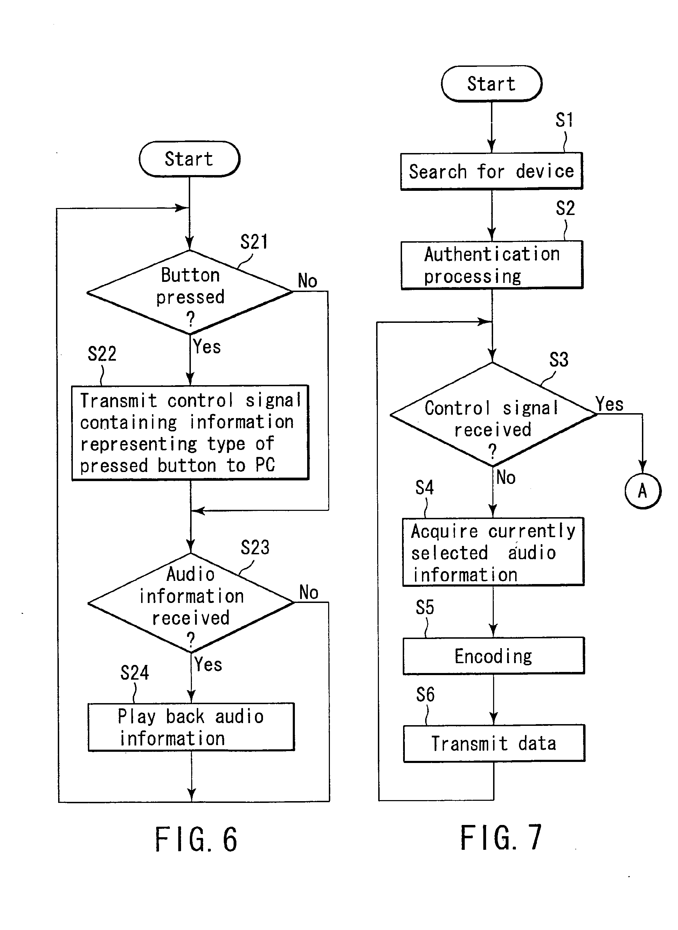

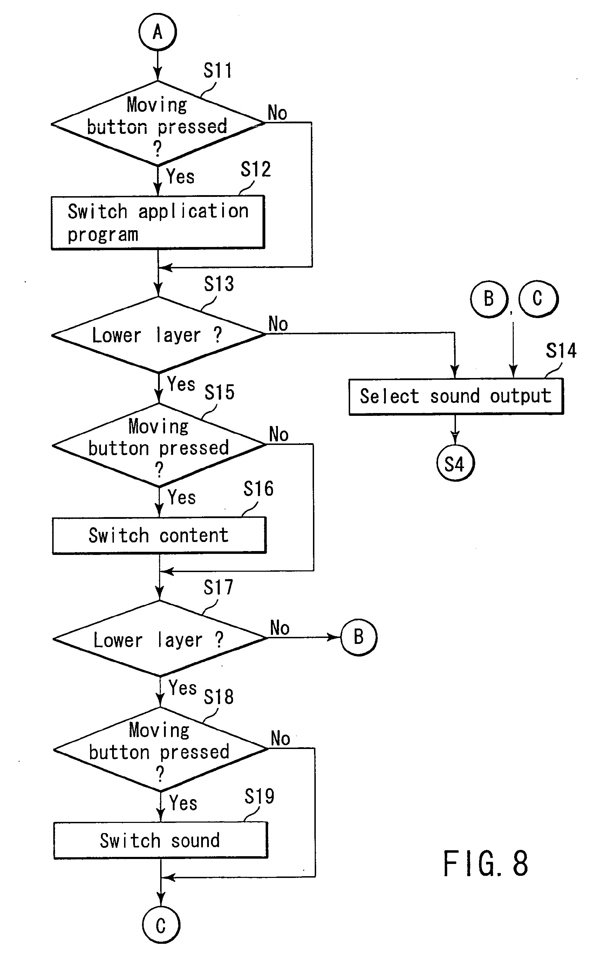

The operation of the sound system according to the embodiment of the present invention will be described with reference to the flow charts of FIGS. 7 and 8.

After the PC 1 and headphone 5 are activated, the PC 1 searches for a peripheral device (S1), and detects the headphone 5. Authentication processing is done between the PC 1 and the headphone 5 (S2) to establish a data exchangeable state.

Whether a control signal has been received from the headphone 5 is determined (S3). If YES in S3, whether the moving button has been pressed in the headphone 5 is determined based on the control signal (S11).

If YES in S11, the application program is switched (S12), and whether a content on a layer lower than the application program exists is determined (S13). If NO in S11, the flow advances to S13.

If NO in S13, whether to output audio information of the selected application program is selected (S14). This selection is determined from the state of the determination button 15 of the headphone 5. For example, if the determination button 15 has been pressed, sound is output; otherwise, no sound is output. The state of the determination button 15 is recognized from a control signal from the headphone 5. After processing in S14, the flow advances to processing in S4.

If YES in S13, whether the moving button has been pressed is determined (S15). If YES in S15, the content is switched (S16), and whether a lower layer exists is determined (S17).

If NO in S17, whether to output audio information of the selected content is selected (S14). After processing in S14, the flow advances to processing in S4.

If YES in S17, whether the moving button has been pressed is determined (S18). If YES in S18, sound is switched (S19), and the flow advances to processing in S14. If NO in S18, the flow advances to processing in S14.

Sound switching in S19 means switching between pieces of audio information such as main sound and sub sound contained in a content, as shown in FIG. 5.

In S4, audio information selected in processes of S11 to S19 is acquired. The acquired audio information is encoded (S5), and the encoded audio information is transmitted to the headphone 5 (S6). The flow then returns to processing in S3.

In the headphone 5, the audio information which has been received from the PC 1 via the wireless module is decoded, and the decoded audio information is output from an audio output unit such as a loudspeaker. As a result, the user of the headphone 5 can listen to the audio information.

FIG. 6 is a flow chart for explaining headphone operation.

In the headphone 5, as shown in FIG. 6, whether a button has been pressed is determined (S21). If YES in S21, a control signal containing information representing the type of pressed button is transmitted to the PC 1 (S22); if NO, the flow advances to processing in S23.

In S23, whether audio information has been received from the PC 1 is determined. If YES in S23, necessary processing is performed for the received audio information. The resultant audio information is played back (S24), and the flow returns to S21. If NO in S23, the flow returns to S21.

With this processing, the user of the headphone can listen to audio information of an arbitrary application program. When pieces of audio information are selected, the pieces of currently selected audio information are synthesized, and the synthesized audio information is encoded and transmitted.

Methods of encoding audio information in the PC 1 and decoding it in the headphone 5 are not particularly limited. The encoding and decoding methods are so set as to coincide with each other between the PC 1 and the headphone 5.

The sound system according to the embodiment of the present invention allows the user of the headphone to select and listen to audio information of an arbitrary application program.

### <Modification>

A short-distance wireless communication apparatus represented by a Bluetooth apparatus can connect a plurality of devices. The embodiment of the present invention can also realize the use of a plurality of connected headphones.

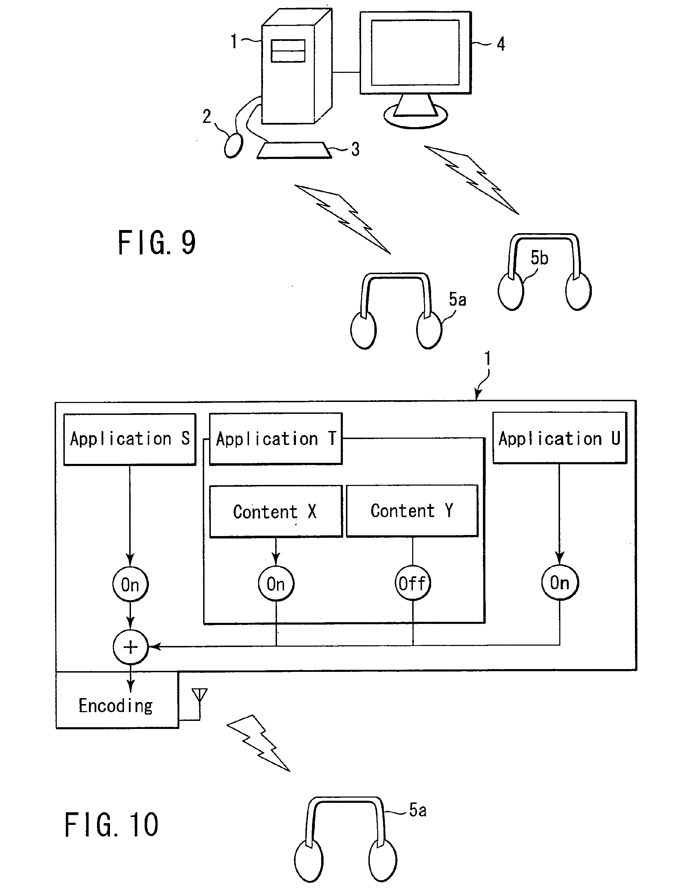

FIG. 9 is a view showing a sound system using a plurality of headphones.

In this modification, two headphones 5a and 5b are used. The same principle can be applied to a larger number of headphones.

The headphones 5a and 5b complete authentication processing by the method described in the above embodiment. The headphones 5a and 5b designate desired application programs for outputting sound, contents, and sounds by the method described in the above embodiment.

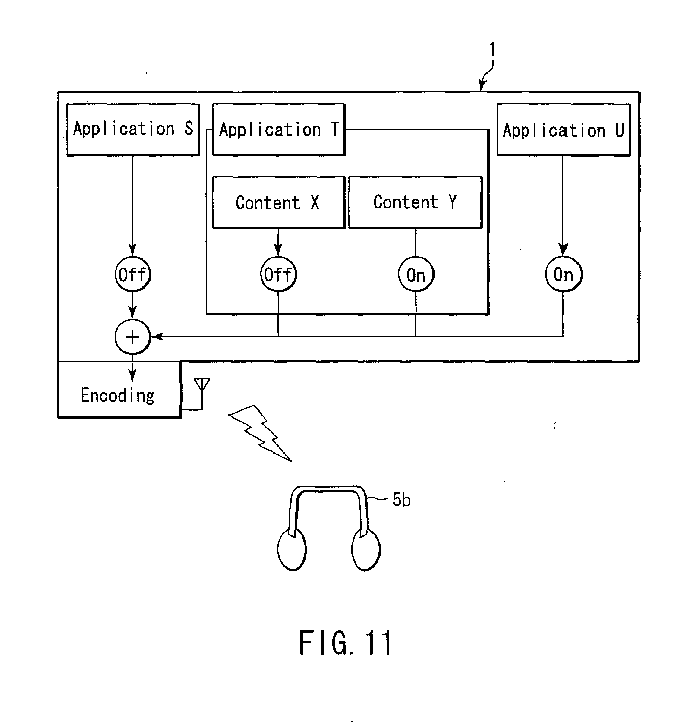

FIG. 10 shows a case wherein the headphone 5a acquires the sound of an application program S, that of a content X played back by an application program T, and that of an application program U. FIG. 11 shows a case wherein the headphone 5b acquires the sound of a content Y played back by the application program T and that of the application program U.

The PC 1 synthesizes and encodes sounds designated for each headphone, and transmits the encoded sound together with the identifier of a transmission destination device. The identifier complies with the protocol of wireless communication. For Bluetooth, a Bluetooth device address is assigned.

Data received by the headphone 5a is decoded by the CPU, and output from a loudspeaker. In this case, the sound of the application program S, that of the content X played back by the application program T, and that of the application program U are output. Similarly, data received by the headphone 5b is decoded by the CPU, and output from a loudspeaker. In this case, the sound of the content Y played back by the application program T and that of the application program U are output.

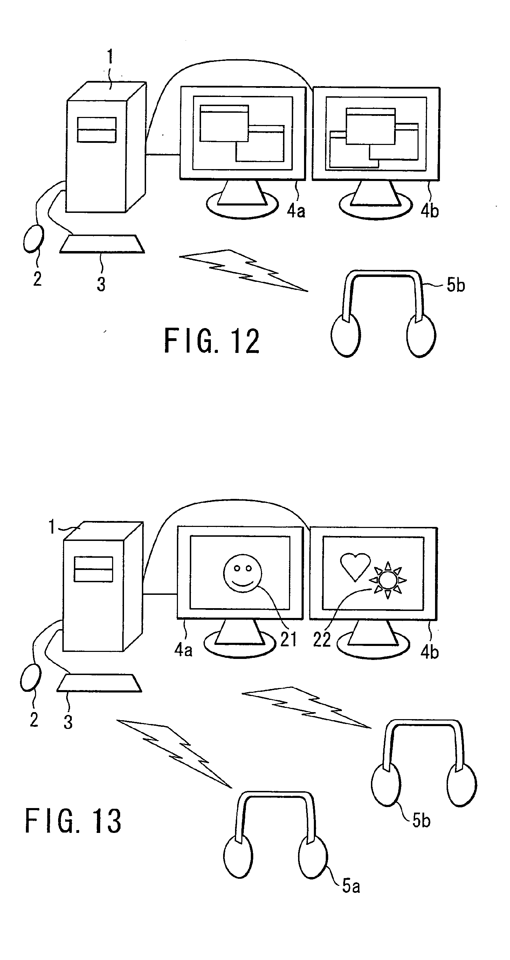

FIG. 12 shows an arrangement in which a plurality of displays 4a and 4b are connected to one PC 1.

The operating system of the PC 1 recognize the physically divided displays 4a and 4b as one coupled drawing region. The user who wears the headphone 5 executes authentication processing. The headphone 5 which has undergone authentication processing selects audio information of an application program from which sound is to be acquired, from the application programs 21 and 22 displayed on the displays 4a and 4b connected to the PC 1. Audio information of an application program is selected by the method described in the above embodiment.

The PC 1 encodes audio information of an application program displayed on a display designated by the headphone 5, and transmits the encoded audio information to the headphone 5 via a short-distance wireless communication apparatus. The headphone 5 decodes the transmitted audio information, and outputs the decoded information. Also, as shown in FIG. 13, the headphones 5a and 5b can acquire pieces of audio information of application programs displayed on desired displays.

This embodiment is effective when a plurality of users watch a television broadcasting program on the PC at home, a plurality of channels are simultaneously displayed while an arbitrary broadcasting program is listened, or a given user listens to main sound but another user listens to sub sound even for the same broadcasting program.

For example, one moving picture content may be displayed on the full screen of each display by one PC such that the user can enjoy an arbitrarily selected content. This usage can be applied when the user who wears a headphone obtains the content of desired information at the exhibition or the like.

The above embodiment has exemplified a headphone as the sound apparatus, and the sound apparatus may be a loudspeaker.

The present invention is not limited to the above-described embodiments, and can be variously modified without departing from the spirit and scope of the invention in practical use. The respective embodiments can be combined as properly as possible. In this case, the effects of the combination can be obtained. The embodiments include inventions on various stages, and various inventions can be extracted by an appropriate combination of building components disclosed. For example, when an invention is extracted by omitting several building components from all those described in the embodiments, the omission is properly compensated for by a well-known technique in practicing the extracted invention.

## Claims

1. A sound apparatus **characterized by** comprising:
a unit (14, 15) which selects one audio information from pieces of audio information of a plurality of application programs executed in an information processing apparatus; and
a unit (5) which outputs the selected audio information.

2. An apparatus according to claim 1, **characterized in that** the unit which selects one audio information comprises
a unit which selects one application program from the plurality of application programs, and
a unit, when the information processing apparatus detects that a plurality of contents exist in said one selected application program, which selects audio information of one content from the plurality of contents.

3. An apparatus according to claim 2, **characterized in that** the unit which selects one audio information further comprises a unit, when the information processing apparatus detects that pieces of audio information exist in said one selected content, which selects one audio information from the pieces of audio information.

4. An apparatus according to claim 3, **characterized in that** the pieces of audio information contain main sound and sub sound.

5. An apparatus according to claim 1, **characterized in that** the sound apparatus includes a wireless headset.

6. An apparatus according to claim 1, **characterized in that** the sound apparatus includes a loudspeaker which wirelessly communicates audio information with the information processing apparatus.

7. An apparatus according to claim 1,
**characterized in that** when the information processing apparatus detects that a lower layer to which audio information of the application program belongs exists in the application program, the unit which selects one audio information selects layers sequentially from an upper layer which is the application program to a lower layer, and selects audio information belonging to the lowest layer.
